# EUROPEAN PATENT APPLICATION

(11) **EP 3 528 213 A1**
(43) Date of publication of application: **21.08.2019**
(21) Application number: 18156801.5
(22) Date of filing: 14.02.2018
(51) Int. Cl.: G07C 5/08, G07C 3/00

(54) **METHOD FOR CONTROLLING OPERATION OF NON-AUTONOMOUS ELECTRIC GARDEN TOOL**

(71) Applicant: TTI (Macao Commercial Offshore) Limited, Macao (MO)
(72) Inventor: Lee, Hei Man, Kwai Chung (HK); Cheung, Ngai, Kwai Chung (HK)
(74) Representative: Stevenson-Hill, Jack Patrick

(57) **Abstract**

A method for controlling operation of a non-autonomous electric garden tool, comprising: monitoring, during operation of the tool, one or more operation parameters associated with the tool; and communicating, during operation of the tool, the one or more monitored operation parameters from a power source of the tool, which is operably connected with the tool, to an external electronic device, for displaying the one or more monitored operation parameters at the external electronic device.

## Description

### TECHNICAL FIELD

The invention relates to a method for controlling operation of a non-autonomous electric garden tool, and also, a power source arranged for controlling operation of a non-autonomous electric garden tool.

### BACKGROUND

Electric garden tools are commonly used in various gardening-related work operations to perform, for example, hedge trimming, grass cutting, etc. During operation, these tools generate a large amount of operation data, which, if not timely utilized, may become wasted. There is a need to provide electric garden tools that better utilize operation data generated by the tool during operation, in a simple and effective manner, to improve operation efficiency and safety.

### SUMMARY OF TH E INVENTION

In accordance with a first aspect of the invention, there is provided a method for controlling operation of a non-autonomous electric garden tool, comprising: monitoring, during operation of the tool, one or more operation parameters associated with the tool; and communicating, during operation of the tool, the one or more monitored operation parameters from any of: (i) a power source of the tool, which is operably connected with the tool, and (ii) the tool, to an external electronic device, for displaying the one or more monitored operation parameters at the external electronic device. Preferably, the communication is performed solely through the power source of the tool. Preferably, the communication of the one or more monitored operation parameters to the external electronic device is also for analysing the one or more monitored operation parameters at the external electronic device. The power source may be in the form of a rechargeable battery pack, such as one with Lithium-based chemistry.

The power source includes a communication module for communication with the external electronic device. Preferably, the communication module of the power source comprises a wireless communication module for data communication with the external electronic device. The wireless communication module is preferably a Bluetooth communication module. Alternatively, the wireless communication module may utilize any of the following communication technologies: Wi-Fi, ZigBee, LTE, NFC, RFID, etc. The tool (without the power source) may have no wireless communication functionality. Alternatively, the tool (without the power source) may have wireless communication functionality. In either case, it is preferred that the communication with the external electronic device is performed through the power source.

Preferably, the method further comprises displaying, at the external electronic device, the one or more monitored operation parameters.

Preferably, the external electronic device is arranged to remain in data connection with the power source during the display step such that the display of the one or more monitored operation parameters is substantially real-time. The term substantially takes into account the time lag due to the small amount of time required for data communication between the external electronic device and the power source. The small amount of time required may vary depending on a distance between the external electronic device and the power source, the quality of connection between the external electronic device and the power source, etc.

Preferably, the method further comprises analyzing the one or more monitored operation parameters to determine an operation profile associated with the tool. The analysis may be performed on a per-operation-session basis. Alternatively, the analysis may be performed across multiple operation sessions.

Preferably, the step of analysis is performed at the external electronic device.

Preferably, the method further comprises: displaying, at the external electronic device, the determined operation profile.

Preferably, the method further comprises: adjusting, based on the analysis, one or more operation parameters of a predetermined operation mode of the tool. The one or more operation parameters of the predetermined operation mode may include: predetermined operation speed of the driving source or cutting element of the tool for a predetermined load, predetermined power output of the power source for a predetermined load, etc.

Preferably, the method further comprises: detecting abnormality in operation of the tool based on the one or more monitored operation parameters.

Preferably, the method further comprises: providing, at the external electronic device, an alarm when an abnormality is detected. The alarm may be a visual alarm, a tactile alarm, an audible alarm, or any of their combination.

Preferably, the method further comprises: transmitting a command from the external electronic device to the power source or the tool to control operation of at least one of: the tool and the power source. The transmission of the command may be from the external electronic device to the power source and then from the power source to the tool if necessary.

Preferably, the one or more operation parameters associated with the tool comprises any of: runtime of the tool; speed of a driving source or cutting element in the tool; torque of the driving source or cutting element in the tool; operation temperature of the driving source; output current of the power source; output voltage of the power source; power capacity of the power source; discharge rate of the power source; and operation temperature of the power source.

Preferably, the non-autonomous electric garden tool is a lawnmower, such as one of push-behind type. Alternatively, the electric garden tool may be edgers, trimmers, hedge-cutter, rake, shredder, chainsaw, blower, blower-vac, etc. Preferably, the non-autonomous electric garden tool is a cordless DC tool or it may be a hybrid AC-DC tool that can operate with both DC power (battery pack) and AC power (AC mains).

In accordance with a second aspect of the invention, there is provided a system for controlling operation of a non-autonomous electric garden tool, comprising: means for monitoring, during operation of the tool, one or more operation parameters associated with the tool; and means for communicating, during operation of the tool, the one or more monitored operation parameters from any of: (i) a power source of the tool, which is operably connected with the tool, and (ii) the tool, to an external electronic device, for displaying the one or more monitored operation parameters at the external electronic device.

Preferably, the power source may be a rechargeable battery pack. The power source may include a wireless communication module; and the communication between the power source and the external electronic device is a wireless communication.

Preferably, the system further includes: means for displaying, at the external electronic device, the one or more monitored operation parameters.

Preferably, the external electronic device is arranged to remain in data connection with the power source during the display step such that the display of the one or more monitored operation parameters is substantially real-time.

Preferably, the system further includes: means for analyzing the one or more monitored operation parameters to determine an operation profile associated with the tool. The means for performing the analysis is preferably the external electronic device.

Preferably, the system further includes: means for displaying, at the external electronic device, the determined operation profile.

Preferably, the system further includes: means for adjusting, based on the analysis, one or more operation parameters of a predetermined operation mode of the tool. The one or more operation parameters of the predetermined operation mode includes any of: predetermined operation speed of the driving source or cutting element of the tool for a predetermined load; and predetermined power output of the power source for a predetermined load.

Preferably, the system further includes: means for detecting abnormality in operation of the tool based on the one or more monitored operation parameters; and means for providing, at the external electronic device, an alarm when an abnormality is detected.

Preferably, the system further includes: means for transmitting a command from the external electronic device to the power source or the tool to control operation of at least one of: the tool and the power source. The transmission of the command may be from the external electronic device to the power source and then optionally from the power source to the tool.

Preferably, the one or more operation parameters associated with the tool comprises any of: runtime of the tool; speed of a driving source or cutting element in the tool; torque of the driving source or cutting element in the tool; operation temperatureof thedrivingsource; output current of the power source; output voltage of the power source; power capacity of the power source; discharge rate of the power source; and operation temperature of the power source.

Preferably, the non-autonomous electric garden tool is a lawnmower.

In accordance with a third aspect of the invention, there is provided a power source, comprising: one or more battery cells; a controller arranged to control operation of the one or more battery cells; and a communication module arranged to communicate with (i) a non-autonomous electric garden tool for obtaining operation parameters of the tool, and (ii) an external electronic device for transmission of the operation parameters to the external electronic device for display and/or analysis. Preferably, the non-autonomous electric garden tool, without thepower source, has no wireless communication functionality.

Preferably, the communication module of the power source includes data and power bus for wired (contact) communication with a controller of the non-autonomous electric garden tool, and a wireless (non-contact) communication module for wireless communication with the external electronic device. The wireless communication may be performed using any of the following communication links: Bluetooth, Wi-Fi, ZigBee, LTE, NFC, RFID, etc.

Preferably, the power source is a rechargeable battery pack, e.g., one of Lithium based chemistry.

In accordance with a fourth aspect of the invention, there is provided a non-autonomous electric garden tool operably connected with the power source of the second aspect.

### BRIEF DESCRIPTION OF THE DRAWINGS

Embodiments of the invention will now be described, by way of example, with reference to the accompanying drawings in which:
Figure 1 is a schematic diagram of an electric garden tool system in another embodiment of the invention;
Figure 2 is a block diagram of the functional modules in the lawnmower, the battery pack, and the mobile electronic device in the system of Figure 1;
Figure 3 is a flow chart illustrating a method for controlling operation of non-autonomous electric garden tool in oneembodiment of the invention;
Figure 4 is a flow chart illustrating another method for controlling operation of non-autonomous electric garden tool in another embodiment of the invention;
Figure 5A is a screenshot of a control application operable on the external electronic device of Figures 1-4 in one embodiment of the invention; and
Figure 5B is another screenshot of a control application operable on the external electronic device of Figures 1-4 in one embodiment of the invention.

### DETAILED DESCRIPTION OF THE PREFERRED EMBODIMENT

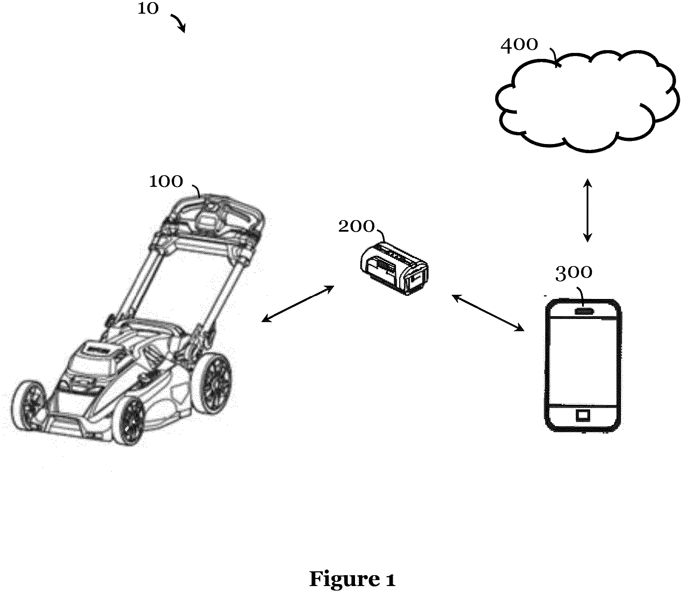

Figure 1 shows an electric garden tool system 10 in one embodiment of the invention. The system 10 includes a push-behind type lawnmower 100 arranged to be inserted with a battery pack 200 for powering the operation of the lawnmower 100. Structurally, the lawnmower 100 generally includes a chassis supported by wheels, a handle connected to the chassis, a cutting blade for performing mowing lawn, a motor for driving the cutting element, a battery receptacle or port for receiving a battery pack 200, control switches or panel provided at or near the handle for controlling the lawnmower 100. The lawnmower 100 is arranged to be pushed from behind by a user during operation to perform mowing.

The system 10 also includes the battery pack 200 arranged to be received in a battery receptacle or port of the lawnmower 100 (the battery pack 200 is shown separately from the lawnmower 100 for illustration purpose). The battery pack 200 is arranged to communicate power and data with the lawnmower 100, for example, through connection terminals on the battery pack 200 and corresponding connection terminals in the battery receptacle or port. The battery pack 200 is also arranged to communicate with an external electronic device, in the form of a mobile phone 300 using for example a wireless communication link such as a Bluetooth communication link. In this embodiment, the battery pack 200 is arranged to relay data communication between the lawnmower 100 and the mobile phone 300.

The system 10 also includes the mobile phone 300 arranged to be operably connected with the battery pack 200, for example through a wireless communication link. The mobile phone 300 may also be connected to a cloud computing server 400 for communicating data, for example, through a wireless communication link. The cloud computing server 400 can be implemented by a combination of hardware and software, on oneor multiple computing systems.

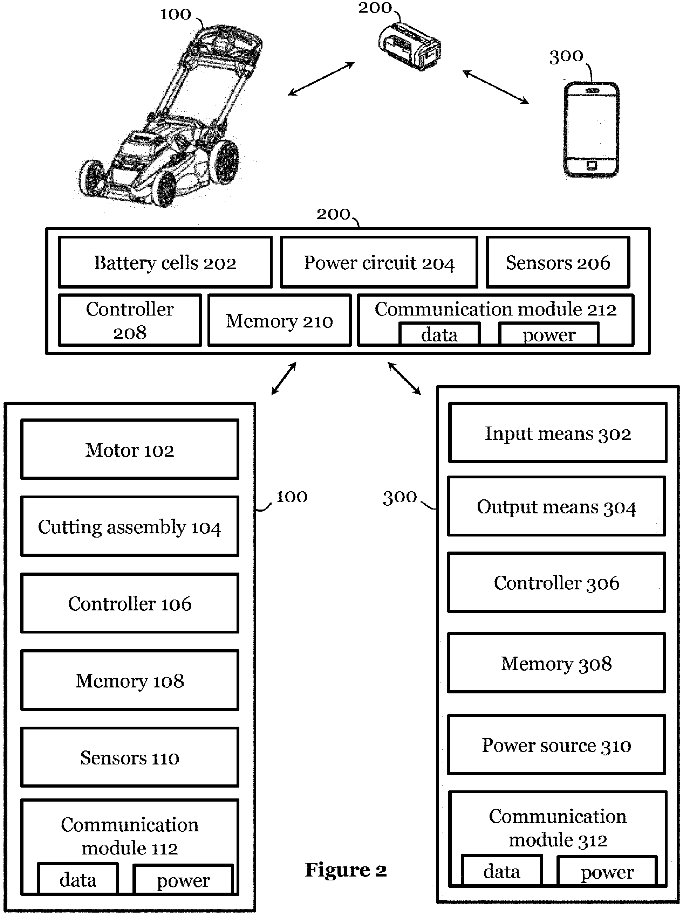

Figure 2 shows functional modules of the lawnmower 100, the battery pack 200, and the mobile phone 300. It should be noted that only functional modules that are relevant to the invention are described. The lawnmower 100, battery pack 200, and mobile phone 300 can each include additional functional modules. The functional modules in each of the lawnmower 100, battery pack 200, and mobile phone 300 are operably connected with each other, by direct or indirect connections.

The lawnmower 100 includes a motor 102 operably connected with a cutting assembly 104 for driving a cutting element of the cutting assembly 104 into rotation to perform mowing. A controller 106 is provided to manage operation of different functional modules 102, 104, 108, 110, 112 of the lawnmower 100. The controller 106 in this embodiment is a microcontroller, but in other examples, it may be formed by one or more MCU, CPU, Raspberry Pi module, etc. A memory module 108 is provided to store instructions and codes for operating the mower. The memory module 108 may also store data or measurements obtained by the sensors 110, 206 or any data and command received at the communication module 112. In the present embodiment, the memory module 1o8 stores information and data related to predetermined operation mode of the lawnmower 100. The memory module 108 may include a volatile memory unit (such as RAM), a non-volatile unit (such as ROM, EPROM, EEPROM and flash memory) or both.

One or more sensors 110 may be provided in the lawnmower 100 to detect the runtime of the lawnmower 100, the speed of a motor, the speed of the cutting element, the torque of the motor, the torque of the cutting element, or the operation temperature of the motor. One or more further sensors 110 may be provided to detect output current of the battery pack 200, output voltage of the battery pack 200, power capacity of the battery pack 200, discharge rate of the battery pack 200, or operation temperature of the battery pack 200. During operation, the sensors 110 may continuously monitor the operation parameters, or alternatively, sample the operation parameters at predetermined time intervals (e.g., every 30 seconds).

The lawnmower 100 also includes a communication module 112 that can communicate data and power with other electrical devices or modules. The communication module 112 includes terminals or contacts at the battery receptacle or port of the lawnmower 100. The terminals or contacts are connected to the controller 106 through one or more data and power bus. The communication module 112 may further include a wireless communication part, operably connected with the controller 106, for communicating wirelessly with the battery pack 200 or any external electronic device.

The battery pack 200 is a smart battery pack, in that it has its own controller 208. The battery pack 200 includes one or more battery cells 202 operably connected in a power circuit 204. The battery cells may be connected in parallel, series, or partly parallel and partly series. In this embodiment the cells 202 are Li-based battery cells. One or more sensors 206 are provided to monitor operation parameters of the battery pack 200. The operation parameters may include one or more of: output current of the battery pack 200, output voltage of the battery pack 200, power capacity of the battery pack 200, discharge rate of the battery pack 200, and operation temperature of the battery pack 200. During operation, the sensors 206 may continuously monitor the operation parameters, or alternatively, sample the operation parameters at predetermined time intervals (e.g., every 30 seconds).

A controller 208 is provided in the battery pack 200 to manage operation of different functional modules 202, 204, 206, 210, 212 of the battery pack 200. The controller 208 in this embodiment is a microcontroller, but in other examples, it may be formed by one or more MCU, CPU, Raspberry Pi module, etc. A memory module 210 is provided to store instructions and codes for operating the battery pack 200. The memory module 210 may also store data or measurements obtained by the sensors 110, 210 or any data and command received at the communication module 212. In the present embodiment, the memory module 210 also stores information and data related to one or more predetermined operation modes of the battery pack 200. The predetermined operation modes may be a long-grass cutting mode, short-grass cutting mode, etc. The memory module 210 may include a volatile memory unit (such as RAM), a non-volatileunit (such as ROM, EPROM, EEPROM and flash memory) or both.

A communication module 212 that can communicate data and power with other electrical devices or modules is provided in the battery pack 200. The communication module 212 includes terminals or contacts, connected to the controller 208 through one or more data and power bus, for communication of data and power with the lawnmower 100 and in particular its controller 106 through corresponding terminals or contacts at the battery receptacle or port of the lawnmower 100. The communication module 112 further includes a wireless communication part, operably connected with the controller 208, for communicating data wirelessly with the lawnmower 100 or any external electronic device. The communication between the battery pack 200 and the lawnmower 100 and the communication between the battery pack 200 and the external electronic device (mobile phone 300) can occur substantially simultaneously.

In this embodiment, the mobile phone 300 includes a controller 306 and a memory unit 308. The controller 306 is a processor formed by one or more CPU, MCU, a Raspberry Pi board, etc. The memory unit 308 may include a volatile memory unit (such as RAM), a non-volatile unit (such as ROM, EPROM, EEPROM and flash memory) or both. Preferably, the mobile phone 300 further includes one or more input devices 302 such as a virtual keyboard, a microphone, a tactile input device (e.g., touch sensitive screen), and an image/video input device (e.g., camera). The mobile phone 300 may further include one or more output devices 304 such as one or more displays, speakers, etc. The displays may be a LCD display, a LED display, an OLED display, etc., that can be touch sensitive. A suitable operating system (e.g., i09®, Android®, Windows®) may be installed in the mobile phone 300, e.g., on the memory unit 308. The memory unit 308 may be operated by the controller 306. The mobile phone 300 also preferably includes a communication module 312 for establishing one or more data and power communication links with one or more other external electronic devices such as the lawnmower 100 (if it includes corresponding interface), battery pack 200, server 400, other personal computers, terminals, or handheld computing devices. The communication links may be wired or wireless. Preferably, the controller 306, the memory unit 308, and optionally the input devices 302, the output devices 304, the communication module 312 are connected with each other through one or more data and power bus. The data or information received at the mobile phone 300 may be transmitted to a cloud server 400 for storage.

In the present embodiment, the data or measurement obtained by the sensors 110, 206 in the lawnmower 100 and the battery pack 200 are transmitted, during operation, to the mobile phone 300. The commands and information transmitted from the mobile phone 300 is first received at the battery pack 200, then at the lawnmower 100 if necessary.

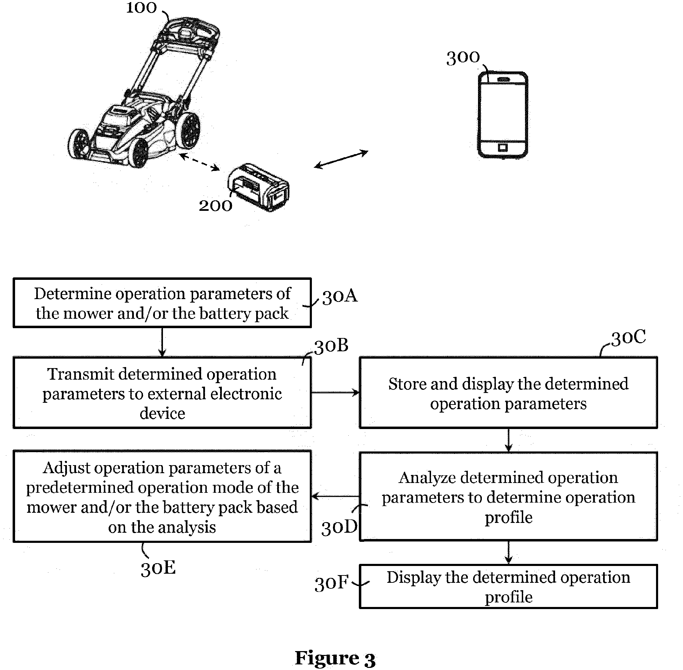

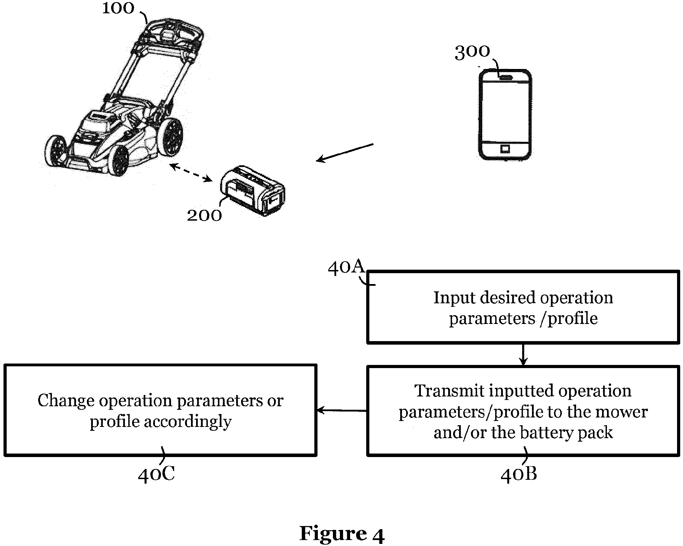

Figures 3 and 4 illustrate operation of the system 10 in one embodiment of the invention.

In Figure 3, during operation, in step 30A, the operation parameters of the lawnmower 100 and/or the operation parameters of the battery pack 200 are detected and monitored by the sensors 110, 206. In step 30B, the detected and monitored operation parameters of the lawnmower 100 and/or the battery pack 200 are transmitted to the mobile phone 300 through the communication module 212 of the battery pack 200. These transmitted operation parameters include operation parameters detected and monitored at the battery pack 200, and operation parameters detected and monitored at the lawnmower 100 and transmitted to the battery pack 200 through the communication module 112. In step 30C, the operation parameters received at the mobile phone 300 is stored in the memory module 308 and is displayed to the user at the display 304 of the mobile phone 300. In this embodiment, the transmission of the operation parameters and hence the display of the operation parameters is substantially continuous and real-time. In Step 30D, the mobile device 300 may, e.g., upon receiving a user input, analyze the operation parameters statistically to determine operation profile of the lawnmower 100. The operation profile may relate to one operation session of the lawnmower 100 or it may relate to multiple operation sessions of the lawnmower 100. The mobile phone 300, upon determining the operation profile, may transmit a command to the lawnmower 100 or the battery pack 200 through the communication interfaces 312, 212, optionally 112 to adjust operation parameters of a predetermined operation mode of the lawnmower 100 and/or the battery pack 200 based on the analysis, as in step 30E. The operation parameter to be adjusted may be a predetermined operation speed of the driving source or cutting element of the lawnmower for a predetermined load (e.g., long grass cutting mode or short-grass cutting mode), a predetermined power output of the battery pack 200 for a predetermined load (e.g., long grass cutting mode or short-grass cutting mode), etc. For example, if the analysis indicates that the power on the motor should be increased for more effectively cutting long grass, then the command may include instructions to increase the preset motor power in long grass cutting mode. The adjustment allows the lawnmower 100 to operate more smartly, taking into account vegetation change, weather change, etc. In step 30F, the mobile phone 300 may display the determined operation profile on its display.

In Figure 4, during operation, in step 40A, the user may input one or more desired operation parameters or change operation profile or mode of the lawnmower 100 or of the battery pack 200 using the input means 302 of the phone 300. Upon receiving the user input, in step 40B, the mobile phone 300 transmits, through the communication module 212, 312 to the battery pack 200, the inputted operation parameters and or profile. If the change or input concerns the lawnmower 100 then the command may be passed from the battery pack 200 to the lawnmower 100 through the communication modules 112, 212. In step 40C, the lawnmower 100 and/or the battery pack 200 may adjust the operation parameters or the operation mode based on the user's input.

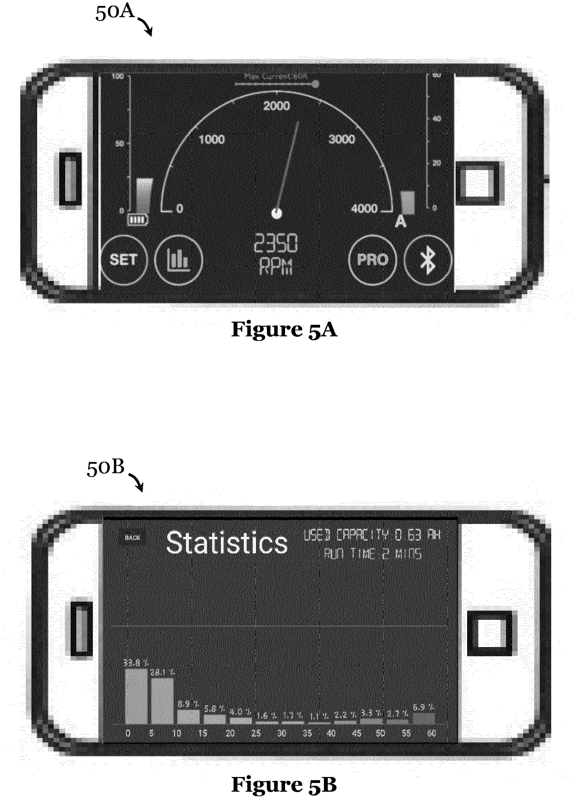

Figure 5A and 5B show exemplary screenshots of the application running on the mobile phone 300 communicating with the battery pack 200 and hence mower 100 during operation. As shown in Figure 5A, the display 50A has a fuel-gauge like display part arranged to display the operation speed of the motor, a current indication bar (on the right) arranged to display the current drawn from the battery pack 200, a battery capacity bar (on the left) arranged to display the amount of energy remaining in the battery pack 200, etc. The display 50A also includes control buttons (virtual), which, from left to right, include: a setting button for controlling settings and operation parameters of the battery pack 200 or the lawnmower 100, an analysis button for running analysis of the operation parameters of the battery pack 200 or the lawnmower 100, a mode change button to selectively turn on and off a "PRO" operation mode (higher power), and a Bluetooth connection button to selectively turn on or off the wireless connection with the battery pack 200 or the lawnmower 100. Figure 5B shows the display 50B after the analysis button is pressed. The analysis includes operation statistics related to one or more operation sessions. Also shown on the display 50B are battery capacity and run-time information.

It will be appreciated by persons skilled in the art that numerous variations and/or modifications may be made to the invention as shown in the specific embodiments of the invention as broadly described. The present embodiments are, therefore, to be considered in all respects as illustrative and not restrictive.

For example, the non-autonomous electric garden tool need not be a lawnmower but can be edger, trimmer, hedge-cutter, rake, shredder, chainsaw, blower, blower-vac, etc. Thetool may be a cordless DC tool or it may be a hybrid AC-DC tool that can operate with both DC power (battery pack) and AC power (AC mains). The tool can operate with more than one battery pack, and if such case, one of the battery packs may be the master control. The communication link between the power source and the tool is preferably wired but can alternatively or additionally be wireless. The communication link between the power source and the external electronic device is preferably wireless but can alternatively or additionally be wired. A wireless communication link between the tool and the power source, or between the power source and the external electronic device, may be provided by any non-cellular communication link such as Bluetooth, Wi-Fi, ZigBee, LTE, NFC, RFID, etc. The communication link between the external electronic device and the server may be any cellular or non-cellular communication link.

In embodiments of a non-autonomous electric garden tool, the lawnmower can be of any form and can be in any other configuration. For example, the handle may be telescopic, a mulcher or a grass catcher may be attached to a rear end of the mower, a blade guard may be provided at the base, or a gearbox may be provided for coupling the driving source with the cutting element. The driving source of the tool can be any motor, but preferably a DC brushless motor. The cutting element may be one or more blades, strings, etc. The communication module of the tool can communicate using only wired connection, only wireless connection, or both. It is preferred that the communication between the tool and the external electronic device is performed mainly or entirely through the communication module of thepower source.

The power source can be of any form and can have other configurations. The power source can be a power pack or a battery pack of any chemistry, including lead-acid cells, fuel cells. The power pack or battery pack can have any nominal voltage and capacity, e.g., 36V, 40V, etc., and 2.6AH, 5.0AH, etc. The power source can be used with two or more different types of garden tools.

The external electronic device need not be a mobile phone but could be a tablet, a laptop, computer, etc., of any shape and form. Preferably, an application is installed at the external electronic device to facilitate interaction between the user and the power source and/or the tool. The server can alternatively be a public server or a private server that is non-cloud based.

The processing of the data obtained by the sensors can be performed entirely on the external electronic device, entirely on the controller of the battery pack and/or the tool, or preferably, partly in the external electronic device and partly in the battery pack and/or the tool.

The information handling system arranged to form the server (or part of it) and the external electronic device may have different configurations, but it generally comprises suitable components necessary to receive, store and execute appropriate computer instructions or codes. The main components of such information handling system are a processing unit and a memory unit. The processing unit is a processor such as a CPU, an MCU, a Raspberry Pi board, etc. The memory unit may include a volatile memory unit (such as RAM), a non-volatile unit (such as ROM, EPROM, EEPROM and flash memory) or both. Preferably, the information handling system further includes one or more input devices such as a keyboard, a mouse, a stylus, a microphone, a tactile input device (e.g., touch sensitive screen) and an image/video input device (e.g., camera). The information handling system may further include one or more output devices such as one or more displays, speakers, disk drives, and printers. The displays may be a liquid crystal display, a LED display, an OLED display or any other suitable display that mayor may not be touch sensitive. The information handling system may further include one or more disk drives which may encompass solid state drives, hard disk drives, optical drives, flash drives, and/or magnetic drives. A suitable operating system (e.g., iOS, Android, Windows®) may be installed in the server, e.g., on the disk drive or in the memory unit of the server. The memory unit and the disk drive may be operated by the processing unit. The information handling system also preferably includes a communication module for establishing one or more communication links (not shown) with one or more other computing devices such as a server, personal computers, terminals, wireless or handheld computing devices. The communication module may be a modem, a Network Interface Card (NIC), an integrated network interface, a radio frequency transceiver, an optical port, an infrared port, a USB connection, or other interfaces. The communication links may be wired or wireless for communicating commands, instructions, information and/or data. Preferably, the processing unit, the memory unit, and optionally the input devices, the output devices, the communication module and the disk drives are connected with each other through a bus, a Peripheral Component Inter connect (PCI) such as PCI Express, a Universal Serial Bus (USB), and/or an optical bus structure. In one embodiment, some of these components may be connected through a network such as the Internet or a cloud computing network. A person skilled in the art would appreciate that the information handling system is merely exemplary and that different servers may have different configurations and still be applicable in the invention as server (or part of it) and the external electronic device.

Although not required, the embodiments described with reference to the Figures can be implemented as an application programming interface (API) or as a series of libraries for use by a developer or can be included within another software application, such as a terminal or personal computer operating system or a portable computing device operating system. Generally, as program modules include routines, programs, objects, components and data files assisting in the performance of particular functions, the skilled person will understand that the functionality of the software application may be distributed across a number of routines, objects or components to achieve the same functionality desired herein.

It will also be appreciated that where the methods and systems of the invention are either wholly implemented by computing system or partly implemented by computing systems then any appropriate computing system architecture may be utilized. This will include stand-alone computers (portable or non-portable), network computers, and dedicated hardware devices. Where the terms "computing system" and "computing device" are used, these terms are intended to cover any appropriate arrangement of computer hardware capable of implementing the function described.

## Claims

1. A method for controlling operation of a non-autonomous electric garden tool, comprising:
monitoring, during operation of the tool, one or more operation parameters associated with the tool; and
communicating, during operation of the tool, the one or more monitored operation parameters from any of
(i) a power source of the tool, which is operably connected with the tool, and
(ii) the tool;
to an external electronic device, for displaying and analysing the one or more monitored operation parameters at the external electronic device.

2. The method of claim 1, wherein the power source comprises a rechargeable battery pack.

3. The method of claim 1 or 2, wherein the power source comprises a wireless communication module; and the communication between the power source and the external electronic device is a wireless communication.

4. The method of any one of claims 1 to 3, further comprising:
displaying, at the external electronic device, the one or more monitored operation parameters.

5. The method of claim 4, wherein the external electronic device is arranged to remain in data connection with the power source during the display step such that the display of the one or more monitored operation parameters is substantially real-time.

6. The method of any oneof claims 1 to 5, further comprising:
analyzing the one or more monitored operation parameters to determine an operation profile associated with the tool.

7. The method of claim 6, wherein the step of analysis is performed at the external electronic device.

8. The method of claim 6 or 7, further comprising:
displaying, at the external electronic device, the determined operation profile.

9. The method of any oneof claims 6 to 8, further comprising:
adjusting, based on the analysis, one or more operation parameters of a predetermined operation mode of the tool.

10. The method of claim 9, wherein the one or more operation parameters of the predetermined operation mode includes any of:
predetermined operation speed of the driving source or cutting element of the tool for a predetermined load; and
predetermined power output of thepower source for a predetermined load.

11. The method of any one of claims 1 to 10, further comprising:
detecting abnormality in operation of the tool based on the one or more monitored operation parameters; and
providing, at the external electronic device, an alarm when an abnormality is detected.

12. The method of any oneof claims 1 to 11, further comprising:
transmitting a command from the external electronic device to the power source or the tool to control operation of at least one of: the tool and the power source.

13. The method of claim 12, wherein the transmission of the command is from the external electronic device to the power source and then optionally from the power source to the tool.

14. The method of any one of claims 1 to 13, wherein the one or more operation parameters associated with the tool comprises any of:
runtimeof the tool;
speed of a driving source or cutting element in the tool;
torque of the driving source or cutting element in the tool;
operation temperature of the driving source;
output current of the power source;
output voltage of the power source;
power capacity of the power source;
discharge rate of the power source; and
operation temperature of the power source.

15. The method of any one of claims 1 to 14, wherein the non-autonomous electric garden tool is a lawnmower.
